# DEMANDE DE BREVET EUROPEEN

(11) **EP 1 211 452 A1**
(43) Date de publication de la demande: **05.06.2002**
(21) Numéro de dépôt: 01811048.6
(22) Date de dépôt: 26.10.2001
(51) Int. Cl.: F16L 37/084

(54) **Procédé de fabrication d'un tube en matière synthétique, notamment pour la protection de câbles et de conduits, et tube réalise selon ce procédé**

(30) Priorité: 20.11.2000 FR 0015048
(71) Demandeur: Plastomer AG, 5436 Würenlos (CH)
(72) Inventeur: Thalmann, Willy, 8954 Geroldswil (CH)
(74) Mandataire: Nithardt, Roland

(57) **Abrégé**

Le procédé de fabrication d'un élément tubulaire raccordé à autre élément similaire au moyen d'un embout de raccordement rapporté, dans lequel le tube est produit par extrusion en continu et l'embout de raccordement, produit par moulage ou thermoformage, est emboîté de force sur l'extrémité du tube, permet d'éliminer les problèmes liés en particulier au soudage du tube et de l'embout.

L'embout de raccordement (10) et le tube (20) comportent respectivement au moins une protubérance annulaire (14) et au moins une gorge périphérique (23), ces deux éléments étant agencés pour coopérer et fixer l'embout rapporté dans une position prédéterminée. L'embout de raccordement (10) comporte un secteur d'extrémité d'emboîtement (15) pourvu de bourrelets périphériques (17) destinés à faciliter son emboîtement sur un premier tube (20) ainsi qu'un secteur d'extrémité de raccordement amovible (11) permettant son raccordement amovible avec l'extrémité amont (21') d'un deuxième tube (20a). Un bourrelet intérieur (16) sert de butée d'arrêt respectivement à l'extrémité aval (21) du tube (20) et à l'extrémité amont (21') du tube (20a).

## Description

La présente invention concerne un procédé de fabrication d'un élément tubulaire en matière synthétique, notamment pour la réalisation d'une gaine de protection de câbles et de conduites, comportant un tube de longueur déterminée et un embout de raccordement monté à l'une des extrémités de ce tube, ledit tube et ledit embout de raccordement étant réalisés séparément.

L'invention concerne également un élément tubulaire en matière synthétique, notamment pour la protection de câbles et de conduites réalisé selon ce procédé et comportant un tube de longueur déterminée et un embout de raccordement monté à l'une des extrémités de ce tube.

Les procédés connus de fabrication de ce type d'éléments tubulaires prévoient habituellement, soit la soudure d'un embout de raccordement à une extrémité d'un tronçon de tube, soit le façonnage de cet embout par thermoformage à la sortie de la ligne d'extrusion ou ultérieurement. La soudure d'un embout de raccordement préfabriqué pose des problèmes complexes dus à une certaine incompatibilité des matériaux utilisés pour fabriquer les tubes, qui sont produits par extrusion, et ceux utilisés pour la fabrication par moulage ou par thermoformage des embouts de raccordement. Les matériaux dans lesquels les embouts de raccordement sont réalisés comprennent souvent des matières plastiques recyclées qui ont des indices de fluidité différents et qui, de ce fait, posent des problèmes de réglage de la température de fusion lors de la soudure. En outre, le temps nécessaire à la soudure des embouts est supérieur à la durée de l'extrusion des tubes, ce qui a pour effet d'allonger le temps total de fabrication des éléments tubulaires et, par conséquent, de réduire la productivité de la ligne de fabrication. Le façonnage par thermoformage est également relativement long. De plus, si l'embout est réalisé par thermoformage de l'une des extrémités du tube, ce dernier est réduit en longueur. Dans ce cas également, l'embout est réalisé avec le même matériau noble que le tronçon cylindrique, ce qui produit globalement une augmentation de la consommation de cette matière noble, alors que les embouts de raccordement sont habituellement fabriqués en totalité ou en partie avec de la matière synthétique recyclée moins coûteuse.

Des essais ont été effectués pour réaliser des tubes associés à des embouts de raccordement fabriqués séparément. Une telle réalisation est notamment décrite dans la publication britannique GB 1 044 354 A qui illustre un tube ayant des extrémités pourvues d'un filetage destiné à coopérer avec un filetage complémentaire d'un embout de raccordement. Ce mode de réalisation se prête mal à une fabrication en continu du tube par extrusion. En outre, un filetage de ce type ne peut pas assurer l'étanchéité du conduit tubulaire réalisé par adjonction de plusieurs tubes juxtaposés et coupés entre eux au moyen d'embouts de raccordement.

Un autre mode de réalisation est décrit dans le brevet américain US 4,747, 621 qui concerne un tube flexible cannelé sur toute sa longueur engagé dans un embout de raccordement comportant des bourrelets intérieurs qui coopèrent avec les cannelures du tube pour assurer la connexion des deux éléments. La présence de cannelures sur le tube ne permet pas une fabrication du tube par extrusion à relativement grande vitesse.

De façon similaire, l'embout de raccordement objet du brevet US 4,583,772 ne peut être utilisé qu'avec un tube comportant des moyens de couplage tels qu'ils ne peuvent pas être obtenus sur un tube fabriqué par extrusion à relativement grande vitesse.

Tous les systèmes connus présentent des inconvénients, soit en ce qui concerne le procédé de fabrication, soit en ce qui concerne le produit résultant.

La présente invention se propose de pallier ces inconvénient avec le procédé selon l'invention, tel que décrit en préambule et caractérisé en ce que ledit tube est produit par extrusion en continu, et en ce que ladite extrusion est suivie d'un tronçonnage de segments dont la longueur correspond à la longueur déterminée dudit tube, de la réalisation d'un chanfrein par usinage à l'extrémité aval du tube et de la réalisation d'au moins une gorge périphérique dans le secteur d'extrémité correspondante dudit tube, en retrait par rapport audit chanfrein, ledit embout de raccordement étant produit par moulage ou thermoformage et agencé pour coopérer par emboîtement de force avec ladite extrémité aval du tube.

Selon un premier mode de réalisation, l'on réalise ledit chanfrein et ladite gorge par enlèvement de matière synthétique, sur la face extérieure du tube du côté de son extrémité aval, au moyen d'outils d'usinage, et l'on emboîte de force ledit embout de raccordement sur ladite extrémité du tube.

Selon un deuxième mode de réalisation, l'on réalise ledit chanfrein et ladite gorge par enlèvement de matière synthétique, sur la face intérieure du tube du côté de son extrémité aval, au moyen d'outils d'usinage, et l'on emboîte ledit embout de raccordement dans ladite extrémité du tube.

L'on réalise de préférence ledit chanfrein et ladite gorge par enlèvement de matière en continu, les outils d'usinage étant agencés pour accompagner le déplacement axial du tube pendant son extrusion.

Selon une forme de réalisation préférée, l'on réalise ledit embout de raccordement avec une géométrie asymétrique, cet embout comprenant deux secteurs d'extrémités opposés dont l'un est agencé pour coopérer par emboîtement de force avec l'extrémité aval d'un premier tube et dont l'autre est agencé pour coopérer de façon amovible avec l'extrémité amont, opposée à l'extrémité aval, d'un deuxième tube.

L'élément tubulaire en matière synthétique selon l'invention tel que défini en préambule est caractérisé en ce qu'il comporte d'une part ledit tube obtenu par tronçonnage de segments de longueur prédéterminée, d'un tube réalisé par extrusion en continu, ce tube étant pourvu d'un chanfrein à l'une de ses extrémités, dite extrémité aval, ainsi que d'au moins une gorge périphérique ménagée en retrait par rapport au chanfrein, et d'autre part ledit embout de raccordement produit par moulage ou thermoformage et agencé pour être emboîté de force à ladite extrémité aval du tube.

Selon un premier mode de réalisation, ledit embout de raccordement est emboîté de force sur l'extrémité aval dudit tube.

Selon un deuxième mode de réalisation, ledit embout de raccordement est emboîté de force dans l'extrémité aval dudit tube.

De manière préférentielle, ledit embout de raccordement et ledit tube comportent des moyens complémentaires d'accrochage et de verrouillage en position, agencés pour coopérer et fixer cet embout de raccordement dans une position prédéterminée par rapport audit tube.

Lesdits moyens complémentaires d'accrochage et de verrouillage en position comportent avantageusement respectivement au moins une protubérance annulaire et au moins ladite gorge périphérique ménagées respectivement sur ledit embout de raccordement et sur ledit tube.

Pour assurer l'étanchéité de la gaine de protection réalisée par la jonction bout à bout de tubes par l'intermédiaire d'embouts de raccordement, ledit embout de raccordement ou ledit tube comporte avantageusement au moins un joint d'étanchéité annulaire logé dans un logement ménagé dans une paroi de l'un des deux éléments comprenant ledit embout de raccordement et ledit tube, ce joint d'étanchéité annulaire ayant une surface en contact avec une paroi de l'autre de ces éléments.

Ledit logement peut être est formé dans la paroi dudit embout de raccordement.

Selon une forme de réalisation particulière, ledit embout de raccordement ou ledit tube comporte au moins un bourrelet périphérique ménagé dans une paroi de l'un des deux éléments comprenant ledit embout de raccordement et ledit tube, ce bourrelet périphérique ayant une surface en contact avec une paroi de l'autre de ces éléments.

De façon préférentielle, ledit embout de raccordement est un manchon asymétrique comportant un secteur d'extrémité emboîtable agencée pour coopérer par emboîtement de force avec l'extrémité aval d'un premier tube et un secteur d'extrémité de raccordement amovible agencée pour se raccorder de manière amovible à l'extrémité amont, opposée à ladite extrémité aval, d'un deuxième tube.

Avantageusement, ledit secteur d'extrémité de couplage a un diamètre intérieur légèrement supérieur au diamètre extérieur du tube et comporte un logement intérieur agencé pour recevoir un joint d'étanchéité torique, destiné à assurer l'étanchéité entre le tube et l'embout de raccordement.

La présente invention et ses avantages apparaîtront mieux dans la description suivante de différents modes de réalisation de l'invention, en référence aux dessins annexés, dans lesquels :
la figure 1 est une vue en coupe axiale d'une première forme de réalisation d'un embout de raccordement d'un élément tubulaire selon l'invention,
la figure 2 est une vue partielle d'une première forme de réalisation d'un élément tubulaire en matière synthétique selon l'invention utilisant l'embout de raccordement de la figure 1,
la figure 3 est une vue partielle d'une deuxième forme de réalisation d'un élément tubulaire en matière synthétique selon l'invention comportant un joint d'étanchéité,
la figure 4 est une vue partielle d'une deuxième forme de réalisation d'un élément tubulaire en matière synthétique selon l'invention utilisant une deuxième forme de réalisation d'un embout de raccordement, et
la figure 5 représente schématiquement les outils d'usinage utilisés sur la ligne d'extrusion des tubes en matière synthétique pour effectuer la coupe, le chanfreinage et le rainurage des tubes.

Le procédé selon l'invention permet de fabriquer des éléments tubulaires en matière synthétique, destinés à être emboîtés les uns dans les autres pour constituer une gaine continue de protection de câbles ou de conduites de gaz ou d'eau enterrés dans une tranchée. La plupart des éléments tubulaires destinés à cet usage sont tulipés à une de leurs extrémités pour permettre l'emboîtement du tube suivant. La particularité du procédé de l'invention réside dans le fait que le tulipage de l'extrémité est remplacé par le montage, à cette extrémité d'un tube de section constante fabriqué par extrusion en continu, d'un embout de raccordement rapporté, fabriqué indépendamment du tronçon cylindrique. La fabrication de cet embout de raccordement peut se faire par injection ou par thermoformage. La fixation à l'extrémité du tube s'effectue par emboîtement de force intérieur ou extérieur.

Ce procédé est original parce qu'il permet de réduire le temps de production par rapport aux méthodes connues qui consistent, soit à souder l'embout de raccordement à l'extrémité du tronçon cylindrique, soit à le façonner par thermoformage pour réaliser un tulipage, et de se libérer de certaines contraintes de fabrication relatives notamment aux paramètres de température qu'il convient d'adapter avec soin lorsque les deux composants sont assemblés par soudure.

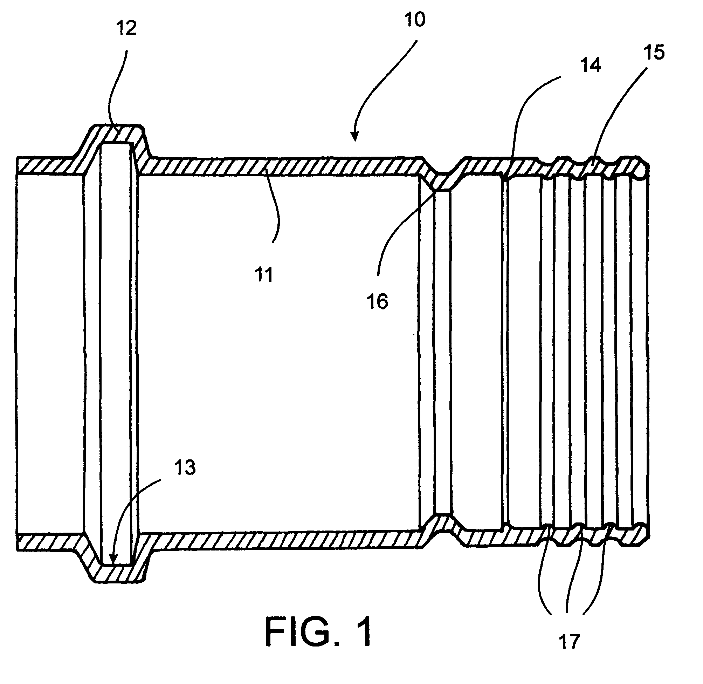

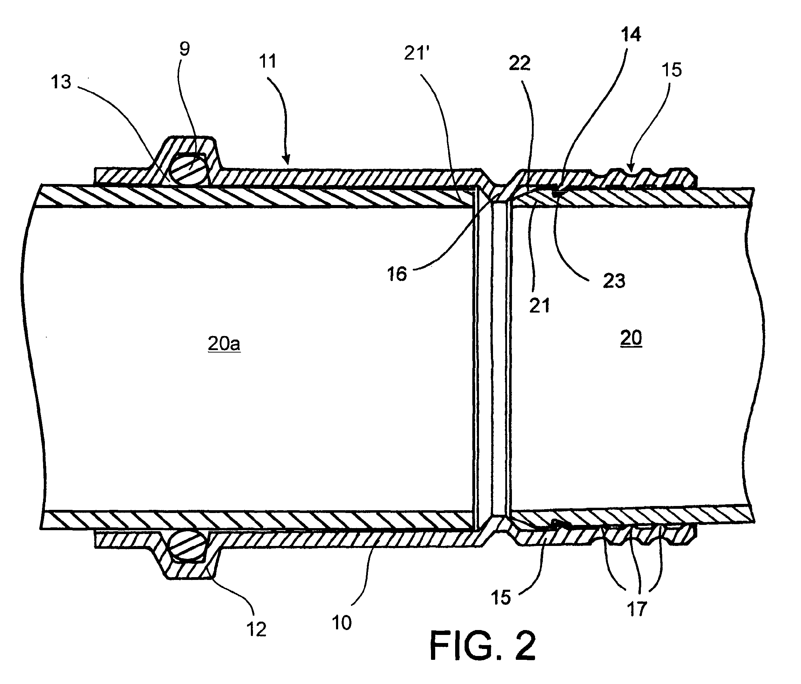

L'embout de raccordement 10 représenté sur les figures 1 et 2 et illustrant une première forme de réalisation, se présente sous la forme générale d'un manchon asymétrique comportant un secteur de raccordement amovible 11 et un secteur d'extrémité emboîtable 15 constituant un secteur de liaison fixe. Les deux secteurs 11 et 15 sont délimitées par un renflement intérieur 16 qui sert de butée d'arrêt respectivement à l'extrémité aval 21 chanfreinée d'un tube 20 et à l'extrémité amont 21' non chanfreinée d'un autre tube 20a. Le secteur de raccordement amovible 11 est pourvu d'un renflement périphérique 12 qui définit un logement 13 destiné à recevoir un joint d'étanchéité torique 9 qui prend appui à la fois contre les parois de ce logement et sur la paroi périphérique du tube qui est engagé dans ce secteur de raccordement. Le secteur d'extrémité emboîtable 15 est pourvu d'une protubérance intérieure 14 de verrouillage en position de plusieurs bourrelets intérieurs 17 dont les fonctions seront définies ci-dessous.

Lors de la mise en place d'une gaine de protection, on place bout à bout des éléments tubulaires selon l'invention comportant chacun un tube 20 ou 20a sur lesquels on a monté de force un embout de raccordement 10. Pour permettre ce montage de force, le tube 20 comporte à son extrémité aval 21, un chanfrein 22 et, en retrait par rapport à ce chanfrein, une gorge périphérique 23 qui est agencée pour coopérer avec la protubérance intérieure 14 de l'embout de raccordement pour assurer un verrouillage en position des deux éléments.

L'extrémité 21 du tube 20 est appelée extrémité aval pour les raisons suivantes. Le tube est fabriqué par extrusion en continu et des segments de longueur prédéterminée sont coupés à la sortie de la tête d'extrusion. L'extrémité du tube qui est sortie la première de cette tête est appelée extrémité aval, l'autre est appelée extrémité amont.

Les bourrelets périphériques intérieurs 17 prennent appui contre la paroi extérieure du tube cylindrique au moment de l'emboîtement de l'embout de raccordement. Ces bourrelets facilitent cet emboîtement en réduisant la surface de contact et, par conséquent, le frottement entre le tube 20 et l'embout de raccordement 10.

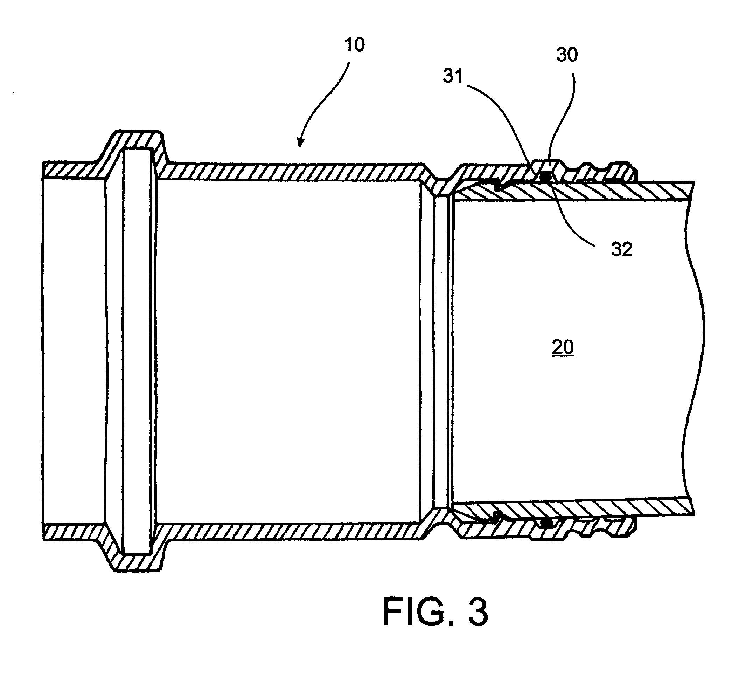

La réalisation de la figure 3 diffère de celle des figures 1 et 2 en ce que ledit embout de raccordement 10 est en outre pourvu d'un bourrelet périphérique extérieur 30 qui définit, sur la paroi intérieure du secteur d'emboîtement, un logement 31 agencé pour recevoir un joint torique 32 qui assure l'étanchéité entre les deux composants, à savoir l'embout de raccordement 10 et le tube 20.

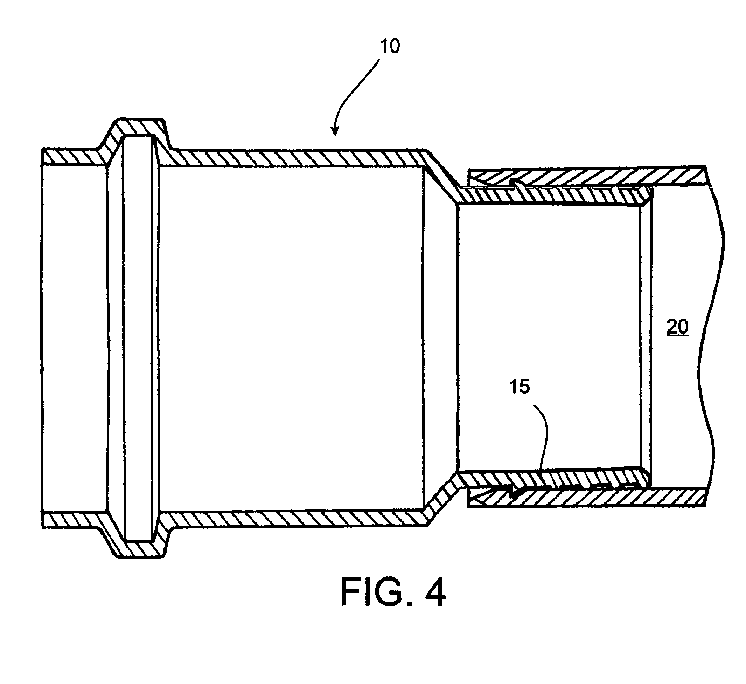

La figure 4 illustre une variante selon laquelle l'embout de raccordement 10 est emboîté à l'intérieur du tube 20. Le secteur d'emboîtement 15 a, dans cette réalisation, une section inférieure à celle du tube cylindrique 20 et se loge à l'intérieur de ce dernier. Cette variante a toutefois l'inconvénient de réduire le diamètre du passage des câbles ou des conduites à l'intérieur de la gaine de protection réalisée au moyen des éléments tubulaires selon l'invention. Les autres caractéristiques sont sensiblement les mêmes que celles des réalisations précédentes.

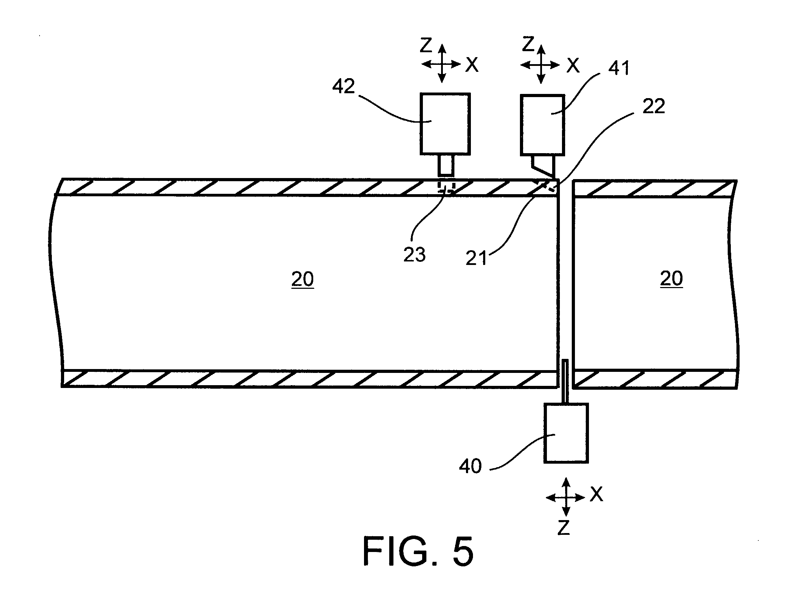

La figure 5 représente schématiquement le mode de réalisation des tubes 20. Comme spécifié ci-dessus, le tube est produit en continu sur une ligne d'extrusion non représentée. Un outil de coupe 40 est disposé le long de la ligne d'extrusion et a pour fonction le tronçonnage du tube pour constituer des segments de longueur prédéterminée. Un burin ou similaire 41 est également disposé le long de cette ligne pour former le chanfrein 22 à l'extrémité 21 qui est appelée extrémité aval du tube 20. Un autre burin 42 est agencé pour former la gorge périphérique 23 mentionnée précédemment et qui coopère avec la protubérance 14 de l'embout de raccordement 10. On notera que ces trois outils sont mobiles selon l'axe X qui correspond à l'axe du tube et à l'axe de déplacement du tube à la sortie de la tête d'extrusion, et selon un axe Z qui est l'axe de plongée des outils de coupe et d'enlèvement de matière synthétique permettant de tronçonner, de former le chanfrein et de réaliser la gorge périphérique. On notera également que, pour des raisons de sécurité, le tube pourrait comporter plusieurs gorges de verrouillage.

## Revendications

1. Procédé de fabrication d'un élément tubulaire en matière synthétique, notamment pour la réalisation d'une gaine de protection de câbles et de conduites, comportant un tube de longueur déterminée et un embout de raccordement monté à l'une des extrémités de ce tube, ledit tube et ledit embout de raccordement étant réalisés séparément, **caractérisé en ce que** ledit tube est produit par extrusion en continu de la matière synthétique et **en ce que** ladite extrusion est suivie d'un tronçonnage de segments dont la longueur correspond à la longueur déterminée dudit tube, de la réalisation d'un chanfrein par usinage à l'une des extrémités, dite extrémité aval, du tube et de la réalisation d'au moins une gorge périphérique dans le secteur d'extrémité correspondante dudit tube, en retrait par rapport audit chanfrein, ledit embout de raccordement (10) étant produit par moulage ou thermoformage et agencé pour coopérer par emboîtement de force avec ladite extrémité aval du tube.

2. Procédé selon la revendication 1, **caractérisé en ce que** l'on réalise ledit chanfrein et ladite gorge par enlèvement de matière synthétique, sur la face extérieure du tube du côté de son extrémité aval, au moyen d'outils d'usinage, et **en ce que** l'on emboîte de force ledit embout de raccordement sur ladite extrémité du tube.

3. Procédé selon la revendication 1, **caractérisé en ce que** l'on réalise ledit chanfrein et ladite gorge par enlèvement de matière synthétique sur la face intérieure du tube du côté de son extrémité aval, au moyen d'outils d'usinage, et **en ce que** l'on emboîte de force ledit embout de raccordement dans ladite extrémité du tube.

4. Procédé selon les revendications 2 et 3, **caractérisé en ce que** l'on réalise ledit chanfrein et ladite gorge par enlèvement de matière synthétique en continu, les outils d'usinage étant agencés pour accompagner le déplacement axial du tube pendant son extrusion.

5. Procédé selon la revendication 1, **caractérisé en ce que** l'on réalise ledit embout de raccordement avec une géométrie asymétrique, cet embout comprenant deux secteurs d'extrémités opposés dont l'un est agencé pour coopérer par emboîtement de force avec l'extrémité aval d'un premier tube et dont l'autre est agencé pour coopérer de façon amovible avec l'extrémité amont, opposée à l'extrémité aval, d'un deuxième tube.

6. Elément tubulaire en matière synthétique, notamment pour la protection de câbles et de conduites, réalisé selon le procédé des revendications précédentes et comportant un tube de longueur déterminée et un embout de raccordement monté à l'une des extrémités de ce tube, **caractérisé en ce qu'**il comporte, d'une part, ledit tube (20) obtenu par tronçonnage de segments de longueur prédéterminée, d'un tube réalisé par extrusion en continu, ce tube étant pourvu d'un chanfrein (22) à l'une de ses extrémités, dite extrémité aval (21), ainsi que d'au moins une gorge périphérique (23) ménagée en retrait par rapport audit chanfrein et, d'autre part, ledit embout de raccordement (10) produit par moulage ou thermoformage et agencé pour coopérer par emboîtement de force avec ladite extrémité aval (21) du tube.

7. Elément tubulaire selon la revendication 6, **caractérisé en ce que** ledit embout de raccordement (10) est emboîté de force sur l'extrémité aval (21) dudit tube (20).

8. Elément tubulaire selon la revendication 6, **caractérisé en ce que** ledit embout de raccordement (10) est emboîté de force dans l'extrémité aval (21) dudit tube (20).

9. Elément tubulaire selon la revendication 6, **caractérisé en ce que** ledit embout de raccordement (10) et ledit tube (20) comportent des moyens complémentaires d'accrochage et de verrouillage en position, agencés pour coopérer et fixer ledit embout de raccordement (10) dans une position prédéterminée par rapport audit tube (20).

10. Elément tubulaire selon les revendications 6 et 9, **caractérisé en ce que** lesdits moyens complémentaires d'accrochage et de verrouillage en position comportent respectivement au moins une protubérance annulaire (14) et au moins ladite gorge périphérique (23) ménagées respectivement sur ledit embout de raccordement (10) et sur ledit tube (20).

11. Elément tubulaire selon la revendication 6, **caractérisé en ce que** ledit embout de raccordement (10) ou ledit tube (20) comporte au moins un joint d'étanchéité annulaire (32) logé dans un logement (31) ménagé dans une paroi de l'un des deux éléments comprenant ledit embout de raccordement (10) et ledit tube (20), ce joint d'étanchéité annulaire ayant une surface en contact avec une paroi de l'autre de ces éléments.

12. Elément tubulaire selon la revendication 11, **caractérisé en ce que** ledit logement (31) est formé dans la paroi dudit embout de raccordement (10).

13. Elément tubulaire selon la revendication 6, **caractérisé en ce que** ledit embout de raccordement (10) ou ledit tube (20) comporte au moins un bourrelet périphérique (17) ménagé dans une paroi de l'un des deux éléments comprenant ledit embout de raccordement (10) et ledit tube (20), ce bourrelet périphérique ayant une surface en contact avec une paroi de l'autre de ces éléments.

14. Elément tubulaire selon la revendication 6, **caractérisé en ce que** ledit embout de raccordement (10) est un manchon asymétrique comportant un secteur d'extrémité emboîtable (15) agencé pour coopérer par emboîtement de force avec l'extrémité aval (21) d'un premier tube (20) et un secteur d'extrémité de raccordement amovible (11) agencé pour se raccorder de manière amovible à l'extrémité amont (21'), opposée à l'extrémité aval (21), d'un deuxième tube (20a).

15. Elément tubulaire selon la revendication 14, **caractérisé en ce que** ledit secteur de raccordement amovible (11) a un diamètre intérieur légèrement supérieur au diamètre extérieur du tube (20) et comporte un logement intérieur (13) agencé pour recevoir un joint d'étanchéité torique (9) destiné à assurer l'étanchéité entre le tube (20) et l'embout de raccordement (10).
